# EUROPEAN PATENT APPLICATION

(11) **EP 4 254 547 A1**
(43) Date of publication of application: **04.10.2023**
(21) Application number: 20963092.0
(22) Date of filing: 30.11.2020
(51) Int. Cl.: H01M 4/133, H01M 4/1393, H01M 4/62, H01M 10/0525

(54) **ELECTROCHEMICAL DEVICE AND ELECTRONIC DEVICE**

(71) Applicant: Ningde Amperex Technology Limited, Ningde, Fujian 352100 (CN)
(72) Inventor: JIN, Wenbo, Ningde, Fujian 352100 (CN); DONG, Jiali, Ningde, Fujian 352100 (CN); HE, Lihong, Ningde, Fujian 352100 (CN); XIE, Yuansen, Ningde, Fujian 352100 (CN)
(74) Representative: Icosa
(86) International application number: PCT/CN2020/132918
(87) International publication number: WO 2022/110204

(57) **Abstract**

An electrochemical apparatus and an electronic apparatus are provided. The electrochemical apparatus includes an electrolyte and a negative electrode plate. The negative electrode plate includes a negative electrode current collector and a negative electrode active material layer disposed on at least one surface of the negative electrode current collector. The negative electrode active material layer contains a negative electrode active material, and a tortuosity T of the negative electrode active material layer satisfies the following relation: 1 < T ≤ 2.5, where the tortuosity T is a ratio of a transmission path length Lₜ of the electrolyte in pores of the negative electrode active material layer to a thickness L₀ of the negative electrode active material layer. By limiting the tortuosity T within the specified range, the transmission path of the electrolyte can be shortened, the wettability of the negative electrode plate can be improved, thus shortening the standing time after injection of the electrochemical apparatus during a production process while also improving the low-temperature discharge performance of the electrochemical apparatus.

## Description

### TECHNICAL FIELD

This application pertains to the field of secondary battery technologies, and specifically relates to an electrochemical apparatus and an electronic apparatus containing such electrochemical apparatus.

### BACKGROUND

With the continuous expansion of the market for electrochemical apparatuses such as lithium-ion batteries, the performance requirements for batteries have been constantly increasing. Among them, the low-temperature discharge performance is an important indicator, especially for electric vehicles and electric tools. In addition, the power market imposes a high restriction on the cost of batteries, which must be kept low, and the production time cycle has a significant impact on the cost. To meet market demands, it is necessary to develop negative electrode plates with excellent electrolyte wettability and lithium-ion batteries with excellent low-temperature performance. In the existing technology, after the battery is filled with electrolyte, it is usually left for a long time at room temperature and high temperature to ensure that the electrolyte completely wets the electrode plate, which takes a long time and seriously affects the speed of battery production. In addition, this method has very limited effects in improving the rate performance of the battery, and it cannot meet the market's demand for low-temperature discharge. Therefore, it is necessary to develop new technologies to meet the requirements for cost and low-temperature discharge performance.

### SUMMARY

To meet the above requirements for cost and low-temperature discharge performance, this application achieves it in the following aspects.

Specifically, one aspect of this application provides an electrochemical apparatus including an electrolyte and a negative electrode plate. The negative electrode plate includes a negative electrode current collector and a negative electrode active material layer disposed on at least one surface of the negative electrode current collector. The negative electrode active material layer contains a negative electrode active material, and a tortuosity T of the negative electrode active material layer satisfies the following relation: 1 < T ≤ 2.5.

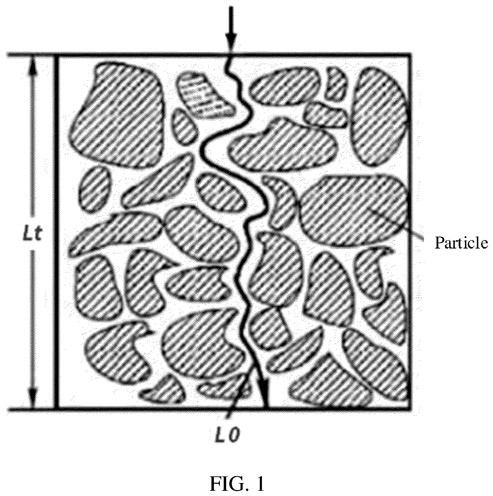

In this application, the tortuosity T is defined as a ratio of a transmission path length Lₜ of the electrolyte through pores of the negative electrode active material layer to a thickness L₀ of the negative electrode active material layer, that is T = Lₜ/L₀, as shown in FIG. 1. Lₜ can be understood as the shortest path taken by the electrolyte through the negative electrode active material layer.

In this application, the inventors found that tortuosity has a significant effect on the wettability of the negative electrode plate. Limiting the tortuosity of the pore structure of the negative electrode plate can shorten the transmission path of the electrolyte in the negative electrode active material layer, and this has a significant effect in improving the low-temperature discharge performance of the battery and reducing the standing time after injection during the production process.

In this application, by adjusting the tortuosity T to adjust the pore structure of the negative electrode plate (that is, limiting the tortuosity T to T ≤ 2.5), the wetting property of the negative electrode plate is improved. The tortuosity T will be affected by a particle size distribution, a compacted density and a porosity of the negative electrode plate. In the calculation method of the tortuosity T, the value of the transmission path Lₜ of the electrolyte in the negative electrode plate may be calculated according to the formula Lₜ = 2 × (PD × Dᵥ99) × (1 - ε), and the unit is µm, where L₀ is the value of the perpendicular distance from the surface far from the negative electrode current collector of the negative electrode active material layer to the negative electrode current collector, and the unit is µm. PD is the value of the compacted density of the negative electrode active material layer, and the unit is g/cm³. Dᵥ99 represents a value of the particle size measured when the cumulative particle volume distribution of the negative electrode active material is 99% as measured by starting from small particle sizes, and the unit is µm. ε is the porosity of the negative electrode plate. By adjusting the compacted density PD, the Dᵥ99 of the negative electrode active material particles and the porosity ε of the negative electrode plate, the transmission path Lₜ of the electrolyte in the negative electrode plate can be affected, and the tortuosity T of the negative electrode plate can be changed. In this application, the tortuosity T of the pore structure of the negative electrode plate meets certain conditions. At the same time, the tortuosity T is closely related to the compacted density PD and porosity ε of the negative electrode plate, and the porosity of the negative electrode plate also affects the wettability. If the pore structure of the negative electrode active material layer is rich, the transmission path of the electrolyte will also be rich, and the infiltration of the electrolyte will be improved. The compacted density of the negative electrode plate and/or the Dᵥ99 of the negative electrode active material particles will affect the degree of particle distribution density and shape, and then affect the transmission path of the electrolyte.

In an embodiment of this application, the value of Dᵥ99 of particles of the negative electrode active material in the negative electrode plate satisfies 30 ≤ Dᵥ99 ≤ 60, with the unit of µm.

In an embodiment of this application, the porosity ε of the negative electrode active material layer in the negative electrode plate satisfies 20% ≤ ε ≤ 40%.

In an embodiment of this application, the compacted density PD of the negative electrode active material layer in the negative electrode plate is PD g/cm³, where 1.50 ≤ PD ≤ 1.75. The negative electrode active material layer with a high compacted density can result in flattened particles that would extend the transmission path of the electrolyte even at the presence of pores, which would be unfavorable for the flow of the electrolyte. Therefore, by limiting the compacted density PD of the negative electrode active material layer, the infiltration performance of the electrolyte can be balanced while ensuring the energy density of the electrochemical apparatus.

In an embodiment of this application, the negative electrode active material includes artificial graphite, natural graphite or a combination thereof.

In this application, the tortuosity T may also be affected by the particle morphology, sphericity, and OI value of the negative electrode plate.

In an embodiment of this application, a sphericity S50 of particles of the negative electrode active material ranges from 0.70 to 0.90,
where S50 represents a shape factor value when a cumulative particle volume distribution of the negative electrode active material is 50%, and
sphericity is a ratio of the circular perimeter of an equivalent projection area of a particle to an actual perimeter of the projection of the particle.

In an embodiment of this application, the negative electrode active material includes primary particles, secondary particles, or mixed particles composed of primary and secondary particles.

In an embodiment of this application, Dᵥ99 of particles of the negative electrode active material satisfies 0.6L₀ ≤ Dᵥ99 ≤ 0.9L₀. Dᵥ99 being too large is not beneficiary to the even distribution of particles, having significant impact on the uniformity of pore structures in the negative electrode active material layer, which in turn affects the infiltration of the electrolyte. Therefore, it is limited that 0.6L₀ ≤ Dᵥ99 ≤ 0.9L₀.

In an embodiment of this application, L₀ satisfies 30 ≤ L₀ ≤ 140, with the unit of µm.

In an embodiment of this application, a bonding force between the negative electrode active material layer and the negative electrode current collector in the negative electrode plate is F ≥ 6 N. Such limitation is to ensure the stability of the negative electrode plate structure, avoid detachment of the negative electrode active material layer from the negative plate current collector affecting performance of the battery, and ensure reliable bonding strength between the negative electrode active material and the current collector.

In an embodiment of this application, an OI value of the negative electrode plate satisfies: 5 ≤ OI value ≤ 15, where the OI value is calculated according to the formula OI value = C004/C110; where C004 is the value of a characteristic peak area between 54.30° and 54.60°, and C110 is the value of a characteristic peak area between 77.35° and 77.50°, as tested by X-ray diffraction spectroscopy, and the OI value is equal to C004/C110. The OI value of the negative electrode plate is influenced by the arrangement of negative electrode active material particles in the negative electrode active material layer, which may affect the tortuosity of the negative electrode active material, and thus affect the low-temperature performance of the electrochemical apparatus.

In an embodiment of this application, an areal density of the negative electrode active material layer is 0.035 mg/mm² to 0.091 mg/mm².

In an embodiment of this application, the negative electrode plate further includes a binder and a dispersant. The binder is selected from organic latex materials, such as butadiene-styrene latex. The dispersant may be selected from dispersants commonly used in the field, such as polysaccharide polymer materials. In this application, the dispersant may be selected from sodium carboxymethyl cellulose.

In an embodiment of this application, the negative electrode plate further includes a conductive agent, which may be selected from conductive agents commonly used in the field, such as a combination of one or more of carbon nanotubes, conductive carbon black, and graphene.

This application further provides an electronic apparatus including the electrochemical apparatus described above.

In an embodiment of this application, the electrolyte includes a compound containing a sulfur-oxygen double bond; the compound containing a sulfur-oxygen double bond includes at least one of methylene methane disulfonate (MMDS), propenyl-1,3-sultone (PES), 1,3-propane disulfonic anhydride (SA), 1,3-propane sultone (PS), 2,4-butane sultone (BS), or vinyl sulfate (DTD).

In an embodiment of this application, based on the weight of the electrolyte, the percentage of the compound containing a sulfur-oxygen double bond is 0.1%-5%. Further inclusion of the compound containing a sulfur-oxygen double bond in the electrolyte can further improve the low-temperature discharge performance of the electrochemical apparatus.

In an embodiment of this application, the electrolyte includes lithium difluorophosphate.

In an embodiment of this application, based on the weight of the electrolyte, the percentage of the lithium difluorophosphate is less than 1%. If the lithium difluorophosphate content is higher than 1%, the viscosity of the electrolyte will increase, the wettability of the negative electrode plate will be affected, and the low-temperature performance of the electrochemical apparatus will be affected.

The technical scheme provided by this application can achieve the following beneficial effects:

By limiting the tortuosity T of the negative electrode plate within a specified range, the electrolyte transmission path can be shortened, and the wettability of the negative electrode plate can be improved. The use of the negative electrode plate disclosed in this application has a significant effect on reducing the standing time after injection during production and improving the low-temperature discharge performance of the battery.

### BRIEF DESCRIPTION OF DRAWINGS

FIG. 1 is a schematic diagram of meanings of parameters involved in the calculation of tortuosity of a negative electrode active material;

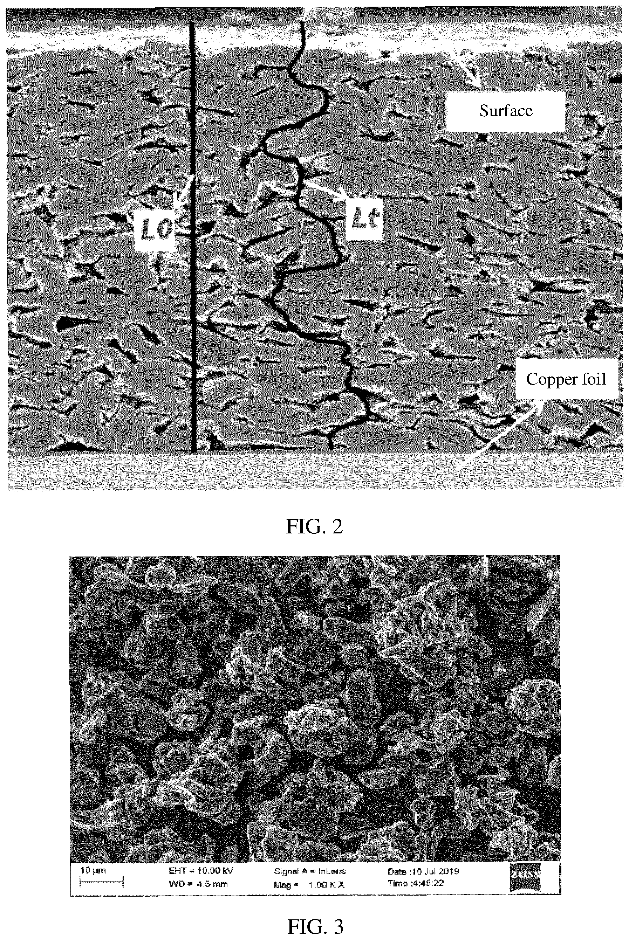

FIG. 2 is a schematic diagram of Lₜ and L₀ of a negative electrode plate;
FIG. 3 shows the morphology of graphite particles in a negative electrode plate;

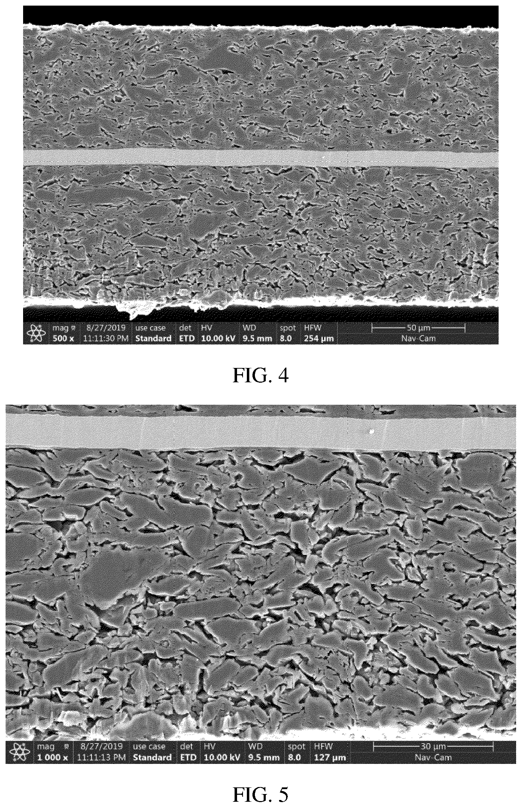

FIG. 4 is a SEM image of a cross section of a negative electrode plate; and
FIG. 5 is an enlarged SEM image of the cross section of the negative electrode plate.

### DESCRIPTION OF EMBODIMENTS

To make the objectives, technical solutions, and advantages of the embodiments of this application clearer, the following clearly and completely describes the technical solutions of this application with reference to the accompanying drawings in the embodiments of this application. Apparently, the described embodiments are some but not all embodiments of this application. All other embodiments obtained by those skilled in the art based on the technical solutions of this application and the embodiments given without creative efforts shall all fall within the protection scope of this application.

### Preparation of lithium ion secondary battery

In this application, the selected negative electrode active material graphite satisfies the following description: the sphericity S50 of graphite particles ranges from 0.70 to 0.89and the particle size satisfies 0.6L₀ ≤ Dᵥ99 ≤ 0.9L₀. The negative electrode active material graphite, binder butadiene-styrene rubber, and thickener carboxymethyl cellulose sodium are proportioned according to a weight ratio of 97:2:1, and then thoroughly mixed in an appropriate amount of deionized water solvent to form a uniform negative electrode slurry. This slurry is applied on a current collector Cu foil, dried, and cold-pressed to obtain a negative electrode plate. As an example, in Example 6, graphite material with a Dᵥ99 particle size range of 30 µm-50 µm (Dᵥ99 is 40 µm in Example 6) is selected, and the weight range of the single-sided negative electrode active material layer of the negative electrode plate is 0.035mg/mm² to 0.091mg/mm² (the weight of the single-sided negative electrode active material layer of the negative electrode plate is about 0.045mg/mm² in Example 6), and to ensure that the tortuosity T of the negative electrode plate is less than or equal to 2.5 and the processing performance is considered, Dᵥ99 needs to satisfy 0.6THK ≤ Dᵥ99 ≤ 0.9THK. Therefore, the thickness range of the single-sided negative electrode active material layer after cold pressing is controlled to be 34 µm-83 µm, and the compacted PD range of the negative electrode plate is controlled to be 1.55 g/cm³-1.75 g/cm³, and the cold pressing speed range of the negative electrode plate is controlled to be 10 m/min-50 m/min.

Phosphate iron lithium is selected as the positive electrode active material, which is mixed with conductive agent acetylene black and binder polyvinylidene fluoride in a weight ratio of 96.3:2.2:1.5 in an appropriate amount of N-methylpyrrolidone solvent to form a uniform positive electrode slurry. This slurry is applied on a current collector Al foil, dried, and cold-pressed to obtain a positive electrode plate.

Preparation of electrolyte: In a dry argon atmosphere glove box, ethylene carbonate (EC), propylene carbonate (PC), methyl ethyl carbonate (EMC), and diethyl carbonate (DEC) are mixed in a mass ratio of 20:20:30:30. Then, 2% of fluoroethylene carbonate and 2% of 1,3-propane sultone are added, dissolved and thoroughly stirred, and lithium salt LiPF₆ is added. After mixing evenly, the base electrolyte is obtained. The concentration of LiPF₆ is 1 mol/L. The percentage of substances in the electrolyte is calculated as a mass percentage based on the weight of the electrolyte.

PE porous polymer film is selected as the separator. The above negative electrode plate and positive electrode plate are rolled together with the separator, placed in an aluminum-plastic film, followed by injection of electrolyte, standing, and formation, to obtain a lithium ion secondary battery.

Electrolytes and lithium-ion batteries of Examples 1 to 11 and Comparative Examples 1 to 2 were prepared according to the above preparation methods, and cycling performance of the batteries was tested.

### Cycling test procedure:

Low-temperature discharge rate testing procedure:
(1) Adjust the furnace temperature to 25°C, and let the battery stand for 5 minutes;
(2) Discharge at 0.5C to 2.5 V;
(3) Let the battery stand for 30 minutes;
(4) Charge at 0.2C to 3.6 V, and constant voltage charge to a current of 0.025C;
(5) Let the battery stand for 10 minutes;
(6) Discharge at 1.0C to a voltage of 2.5 V (reference capacity);
(7) Let the battery stand for 10 minutes;
(8) Charge at 0.2C to 3.6 V, and constant voltage charge to a current of 0.025C;
(9) Let the battery stand for 10 minutes;
(10) Adjust the furnace temperature to -10°C, and let the battery stand for 60 minutes;
(11) Discharge at 1.0C to 2.5 V;
(12) Charge at 0.2C to 3.6 V, and constant voltage charge to a current of 0.025C;
(13) Let the battery stand for 10 minutes;
(14) Discharge at 1.0C to 2.5 V (-10°C discharge capacity);
(15) Adjust the furnace temperature to 25°C, and let the battery stand for 60 minutes; and
(16) End the test.

### Test for standing time after injection:

The batteries were placed in a constant temperature box of 25°C after injection, and timing was carried out from the beginning of injection at time t₁ to time t₂ when the surface of the negative electrode plate was infiltrated all through by the electrolyte. One battery was disassembled every hour to observe whether all positions of the entire electrode plate were infiltrated by the electrolyte, especially the corners and edges. If all were infiltrated, infiltration is considered complete. The infiltration time t is t₂ - t₁.

Parameter settings and test results of the examples and comparative examples are given in Table 1.

The compacted density PD, particle size Dᵥ99, and porosity ε of the electrode plate affect the transmission path Lₜ of the electrolyte in the electrode plate, thereby changing the tortuosity T of the electrode plate. The transmission path of the electrolyte in the electrode plate is Lₜ = 2 × (PD × Dᵥ99) × (1 - ε). When the compacted density PD, particle size Dᵥ99, and porosity ε of the electrode plate are controlled to meet certain conditions, the value of Lₜ/L₀ can be less than or equal to 2.5, which means the tortuosity T ≤ 2.5.

In Table 1, Examples 1 to 11 have the standing time after injection and low-temperature discharge performance corresponding to the tortuosity T of pores of the negative electrode plate satisfying T ≤ 2.5, while Comparative Examples 1 and 2 have the standing time after injection and low-temperature discharge performance corresponding to the tortuosity of the negative electrode plate not satisfying the above condition.

**Table 1**

| | Dv99 (µm) | PD (g/cm³) | ε (%) | Lₜ (µm) | L₀ (µm) | T | Standing time t after injection (h) | Discharge rate at -10°C |
|---|---|---|---|---|---|---|---|---|
| Example 1 | 34 | 1.50 | 40% | 62 | 56 | 1.1 | 35 | 79.5% |
| Example 2 | 32 | 1.53 | 37% | 62 | 52 | 1.2 | 35 | 79.9% |
| Example 3 | 34 | 1.55 | 34% | 70 | 51 | 1.4 | 32 | 81.9% |
| Example 4 | 36 | 1.58 | 33% | 76 | 51 | 1.5 | 32 | 82.0% |
| Example 5 | 39 | 1.55 | 32% | 82 | 50 | 1.6 | 31 | 82.5% |
| Example 6 | 40 | 1.58 | 30% | 88 | 48 | 1.8 | 31 | 82.2% |
| Example 7 | 41 | 1.60 | 27% | 96 | 46 | 2.1 | 34 | 79.9% |
| Example 8 | 41 | 1.62 | 25% | 99 | 47 | 2.1 | 34 | 79.7% |
| Example 9 | 40 | 1.65 | 23% | 101 | 46 | 2.2 | 35 | 79.5% |
| Example 10 | 40 | 1.73 | 21% | 110 | 46 | 2.4 | 35 | 79.0% |
| Example 11 | 43 | 1.75 | 20% | 121 | 49 | 2.5 | 38 | 78.7% |
| Comparative Example 1 | 45 | 1.75 | 20% | 126 | 48 | 2.6 | 52 | 66.9% |
| Comparative Example 2 | 46 | 1.76 | 21% | 128 | 46 | 2.8 | 55 | 66.7% |

From Examples 1 to 11 in Table 1, it can be found that a smaller tortuosity of the negative electrode pores is advantageous to the wetting and formation of the electrode and the low-temperature discharge performance of the battery. The tortuosity is less than or equal to 2.5 in all examples 1 to 11, and it can be found that the standing time after injection is relatively short, and the rate performance is excellent. This is because the lower tortuosity can ensure that the pore structures in the electrode plate are abundant, and the particles are not flattened, which is very beneficial to the flow of the electrolyte inside the negative electrode plate. The flow rate and path of the electrolyte are rich, which can reduce the standing time after injection and improve production efficiency. In addition, good infiltration of the electrolyte is beneficial to the low-temperature discharge performance of the battery. Low temperature will affect the flow of the electrolyte, but when the pore structures of the negative electrode are rich and evenly distributed, this effect will be small, and the battery will also show excellent rate performance at low temperature. From the comparison of comparative examples 1 and 2, it can be found that when the tortuosity T is greater than 2.5, the standing time after injection increases significantly, and the low-temperature rate performance of the battery also deteriorates significantly.

On the basis of Example 6, further optimization is made to further control the uniform distribution of pore structures in the negative electrode plate. The sphericity S50 of the negative electrode active material particles is limited to 0.70 to 0.90. If S50 is too large, it is not conducive to the uniform distribution of particles, the pore pathway in the negative electrode plate is monotonous and not conducive to the multi-path flow of electrolyte. If S50 is too small, it indicates that there are more particles with corners, which will result in a significant reduction in pore structures due to the interstitial distribution of particles, which is not conducive to the infiltration and flow of electrolyte, thus affecting the low-temperature performance of the battery. Therefore, the sphericity S50 of the negative electrode active material particles is limited to 0.70 to 0.90.

On the basis of the Example 6, the particle sphericity S50 of the negative electrode active material particles was further limited to 0.70 to 0.90, in order to optimize the standing time after injection and low-temperature discharge performance of the batteries. Test data is shown in Table 2.

**Table 2**

| | S50 | Standing time t after injection (h) | Discharge rate at -10°C |
|---|---|---|---|
| Example 6 | 0.68 | 28 | 83.1% |
| Example 12 | 0.70 | 26 | 84.1% |
| Example 13 | 0.73 | 25 | 84.4% |
| Example 14 | 0.78 | 24 | 84.5% |
| Example 15 | 0.80 | 25 | 84.5% |
| Example 16 | 0.85 | 26 | 84.4% |
| Example 17 | 0.90 | 26 | 84.2% |
| Example 18 | 0.92 | 28 | 84.0% |

It can be found from Table 2 that when the sphericity S50 of the material particles ranges from 0.70 to 0.90, both the standing time after injection and the low-temperature discharge performance are relatively excellent.

To further ensure the structural stability, low-temperature performance, and energy density of the negative electrode plate, further optimization was made based on Example 15. To ensure the stability of the negative electrode plate structure and avoid decarburization and powder shedding affecting the battery performance, and ensure that there is a reliable bonding strength between the negative electrode active material layer and the current collector, the bonding force between the active material layer and the current collector of the negative electrode plate was limited to F ≥ 6 N. The OI value of the negative electrode plate has a significant impact on the low-temperature performance of the battery. If the OI value is too high, in addition to weak low-temperature discharge capacity, it may also pose safety risks such as lithium deposition. Therefore, the negative electrode plate was limited to 5 ≤ OI value ≤ 15. To ensure the low-temperature performance and energy density of the battery, the areal density range of the negative electrode plate was limited to 0.035 mg/mm²-0.091 mg/mm². The negative electrode active material may be artificial graphite, natural graphite, or mixed graphite, and preferably artificial graphite is. For the structure of graphite, primary particles, secondary particles, or composite particles can be used.

The bonding force F, OI value, and areal density of the negative electrode plate were further limited based on Example 15 to optimize the standing time after injection and the low-temperature discharge performance of the battery. Test data is shown in Table 3.

**Table 3**

| | Bonding force F | OI value | Negative electrode plate areal density (g/mm²) | Standing time t after injection (h) | Discharge rate at -10°C |
|---|---|---|---|---|---|
| Example 15 | 5 | 13 | 0.045 | 25 | 84.5% |
| Example 19 | 6 | 12 | 0.065 | 22 | 84.8% |
| Example 20 | 8 | 13 | 0.068 | 21 | 84.9% |
| Example 21 | 10 | 13 | 0.070 | 22 | 85.1% |
| Example 22 | 9 | 13 | 0.073 | 20 | 85.2% |
| Example 23 | 8 | 13 | 0.073 | 21 | 85.1% |
| Example 24 | 9 | 15 | 0.075 | 22 | 85.0% |
| Example 25 | 10 | 14 | 0.075 | 20 | 85.3% |
| Example 26 | 8 | 12 | 0.075 | 21 | 85.1% |
| Example 27 | 9 | 11 | 0.075 | 22 | 85.0% |
| Example 28 | 9 | 13 | 0.078 | 20 | 84.9% |
| Example 29 | 9 | 13 | 0.081 | 23 | 84.5% |
| Example 30 | 9 | 16 | 0.087 | 24 | 84.3% |

It can be found from Table 3 that the improvement of bonding force is beneficial for low-temperature discharge. The larger negative electrode OI value or areal density of the negative electrode active material layer will cause slight loss to the low-temperature performance. Therefore, limiting the bonding force F, OI value, and areal density of the negative electrode plate to within specified ranges can optimize the standing time after injection and low-temperature discharge performance of the battery.

In conclusion, this application can improve the wetting property of negative electrode active material by limiting the tortuosity of pores in the negative electrode active material to T ≤ 2.5 in the negative electrode plate. The use of the negative electrode plate in this application can shorten the standing time after injection of lithium ion battery and improve the low-temperature discharge performance of the battery.

The electrolyte composition was further optimized based on Example 15 to improve the standing time after injection and the low-temperature discharge performance. Test data is given in Table 4.

**Table 4**

| | Compound containing sulfur-oxygen double bond | | Lithium difluoropho sphate (%) | Standing time t after injection (h) | Discharge rate at -10°C |
|---|---|---|---|---|---|
| | Composition | Percent (%) | | | |
| Example 15 | PS | 2 | - | 25 | 84.5% |
| Example 31 | PS | 1 | 0.5 | 24 | 84.8% |
| Example 32 | PS+MMDS | 1+0.5 | - | 24 | 85.2% |
| Example 33 | PS+DTD | 1.5+1 | - | 25 | 85.4% |
| Example 34 | PS | 3 | 0.3 | 25 | 85.1% |
| Example 35 | PS | 2 | 0.6 | 25 | 85.6% |
| Example 36 | PS | 2 | 0.9 | 26 | 85.8% |
| Example 37 | PS | 2 | 1 | 27 | 85.1% |
| Example 38 | PS+DTD | 3+2 | 0.1 | 24 | 85.3% |
| Example 39 | PA | 0.5 | 0.1 | 25 | 84.3% |

| | | | | | |
|---|---|---|---|---|---|
| "-" indicates no addition. | | | | | |

Through Table 4, it can be found that adjusting the composition of the electrolyte appropriately can further improve the wettability of the negative electrode plate while also improving the low-temperature discharge rate of the battery.

## Claims

1. An electrochemical apparatus comprising an electrolyte and a negative electrode plate, wherein the negative electrode plate comprises a negative electrode current collector and a negative electrode active material layer disposed on at least one surface of the negative electrode current collector, and the negative electrode active material layer contains a negative electrode active material, wherein a tortuosity T of the negative electrode active material layer satisfies the following relation: 1 < T ≤ 2.5;
wherein the tortuosity T is a ratio of a transmission path length Lₜ of the electrolyte through pores of the negative electrode active material layer to a thickness L₀ of the negative electrode active material layer.

2. The electrochemical apparatus according to claim 1, wherein a porosity ε of the negative electrode active material layer satisfies: 20% ≤ ε ≤ 40%.

3. The electrochemical apparatus according to claim 1, wherein a compacted density PD g/cm³ of the negative electrode active material layer satisfies the following relation: 1.50 ≤ PD ≤ 1.75.

4. The electrochemical apparatus according to claim 1, wherein a sphericity S50 of particles of the negative electrode active material ranges from 0.70 to 0.90;
wherein S50 represents a shape factor value when a cumulative particle volume distribution of the negative electrode active material is 50%; and
the sphericity is a ratio of a circular perimeter of an equivalent projected area of a particle to an actual perimeter of a projection of the particle.

5. The electrochemical apparatus according to claim 1, wherein Dᵥ99 of particles of the negative electrode active material and L₀ satisfies: 0.6L₀ ≤ Dᵥ99 ≤ 0.9L₀.

6. The electrochemical apparatus according to claim 1, wherein a bonding force F between the negative electrode active material layer and the negative electrode current collector satisfies: F ≥ 6 N.

7. The electrochemical apparatus according to claim 1, wherein an OI value of the negative electrode plate satisfies: 5 ≤ OI value ≤ 15, wherein the OI value is calculated according to the formula: OI value = C004/C110;
wherein C004 is a value of a characteristic peak area of the negative electrode plate at 54.30° to 54.60°, and C110 is a value of a characteristic peak area around 77.35° to 77.50°, as tested by X-ray diffraction spectroscopy.

8. The electrochemical apparatus according to claim 1, wherein an areal density of the negative electrode active material layer is 0.035 mg/mm² to 0.091 mg/mm².

9. The electrochemical apparatus according to claim 1, wherein the electrolyte comprises a compound containing a sulfur-oxygen double bond; and
the compound containing a sulfur-oxygen double bond comprises at least one of methylene methane disulfonate, propenyl-1,3-sultone, 1,3-propane disulfonic anhydride, 1,3-propane sultone, 2,4-butane sultone, or vinyl sulfate, and a percentage of the compound containing a sulfur-oxygen double bond is 0.1%-5% based on a weight of the electrolyte.

10. The electrochemical apparatus according to claim 1, wherein the electrolyte comprises lithium difluorophosphate, and a percentage of lithium difluorophosphate is below 1% based on a weight of the electrolyte.

11. An electronic apparatus comprising the electrochemical apparatus according to any one of claims 1 to 10.
